# EUROPEAN PATENT SPECIFICATION

(11) **EP 2 355 399 B1**
(45) Date of publication and mention of the grant of the patent: **29.11.2017**
(21) Application number: 11153932.6
(22) Date of filing: 09.02.2011
(51) Int. Cl.: H04L 9/00

(54) **Device and method for implementing a cryptographic hash function**
Vorrichtung und Verfahren zur Umsetzung einer kryptografischen Hash-Funktion
Dispositif et procédé pour réaliser une fonction de hachage cryptographique

(30) Priority: 09.02.2010 US 302833 P
(43) Date of publication of application: 10.08.2011
(73) Proprietor: Certicom Corp., Mississauga, Ontario L4W 0B5 (CA)
(72) Inventor: Struik, Marinus, Mississauga Ontario L4W 5L1 (CA)
(74) Representative: Hanna Moore + Curley

(56) References cited:
- ZIGBEE ALLIANCE: "ZigBee specification, document 053474r06, version 1.0", INTERNET CITATION, 27 June 2005 (2005-06-27), XP002474317, Retrieved from the Internet: URL:http://www.nd.edu/mhaenggi/ee67011/zig bee.pdf [retrieved on 2008-03-27]
- "Federal Information Processing Standards Publication 180-2. Announcing the SECURE HASH STANDARD", INTERNET CITATION, 1 August 2002 (2002-08-01), page 75PP, XP007918506, [retrieved on 2011-05-03]
- "INFORMATION TECHNOLOGY - SECURITY TECHNIQUES - MESSAGE AUTHENTICATION CODES (MACS) - PART 1: MECHANISMS USING A BLOCK CIPHER//TECHNOLOGIES DE L'INFORMATION - TECHNIQUES DE SECURITE - CODES D'AUTHENTIFICATION DE MESSAGE (MACS) - PARTIE 1: MECANISMES UTILI", INTERNATIONAL STANDARD ISO/IEC, XX, XX, vol. 9797-01, 1 January 1999 (1999-01-01), XP008033366,
- LEI DUO AND CHAO LI: "Improved Collision and Preimage Resistance Bounds on PGV Schemes", INTERNET CITATION, 9 December 2006 (2006-12-09), XP007918501, Retrieved from the Internet: URL:http://eprint.iacr.org/2006/462 [retrieved on 2011-05-03]

## Description

This invention relates generally to the field of cryptography, for example an apparatus and method for executing a cryptographic hash function.

Cryptographic hash functions are used by computing devices to secure communications.

A hash function is a mechanism for mapping messages of arbitrary length to messages of small fixed length. These so-called hash-values of the message are intended to serve as compact representative images of the messages themselves. For this reason, a hash-value is sometimes called a digital fingerprint. A basic requirement on hash functions is that they must be difficult to forge, i.e., knowledge of a hash-value alone should not allow the effective computation of a message that maps to this hash value (the so-called preimage resistance).

Other requirements may be that it should be hard to find two distinct messages that map to the same hash value (the so-called collision resistance) and that, given a message and corresponding hash value, it should be hard to find another message that maps to the same hash value (the so-called 2^{nd} pre-image resistance). Typically, if the hash function maps arbitrary binary strings to i-bit hash values, one aims for hash functions that offer roughly i-bit preimage resistance, i-bit 2^{nd} preimage resistance, and i/2-bit collision resistance. Hash functions are typically designed with all these three security objectives in mind, but variations do occur, depending on application. Hash functions are extremely hard to design well, as evidenced by recent cryptographic advances on breaking SHA-1 - a hash function with 160-bit output size, where previous estimates of 80-bit collision resistance had to be revised downwards to less than 63-bit only, hardly sufficient given the present state of interconnected computing technology.

Most modem hash functions are iterated hash functions, i.e., designed as iterated processes involving the subsequent processing of fixed-size blocks of the input message (via a so-called compression function). To this end, the hash input x of arbitrary length is formatted, so that it can be divided into fixed-length input strings x1, ..., xt, to be subsequently fed to the compression function. The compression function then processes these inputs iteratively, thereby transforming its internal state, based on fixed inputs received and initial publicly known state. The final internal state resulting from this iterative process is then mapped to the hash-value.

The formatting process may require appending extra bits (padding) to the input string so as to make sure that the resulting bit string has a length that is an integer factor times the fixed-size blocks of the compression function. The main requirement on padding is that given the padded string x ∥pad(x), one should be able to unambiguously extract the unpadded string x. For security reasons, padding often includes appending a fixed-size string to the input string indicating the bit-length of the unpadded input string (Merkle-Damgård strengthening (or MD-strengthening)). MD-strengthening has the effect that provability results on the compression function of an iterated hash function carry over to the hash function itself, using a security argument that an MD-padded input string cannot be a suffix of another MD-padded input string.

MD-padding with a fixed-size input length encoding of n bits allows for hash inputs of size less than 2^{r} bits (or 2ⁿ units if all input strings are always measured in units (e.g., octet strings, rather than bit strings)).

Unambiguous padding is usually realized by appending to the unpadded input string the bit '1' followed by a number of '0' bits and has the result that one can unambiguously extract any input string x from x ∥ 10...0 by scanning the padded string from the right to the left till one embarks upon the first '1' bit (which, thus, acts as a separator symbol). Alternative schemes are possible (including interchanging the '1' and '0' symbols in the padded information), but do invariably require the use of at least one additional bit if the size of the input string is not known a priori. If the compression function operates on B-bit input strings and if MD-formatting uses an n-bit encoding of length information, then the padded string x ∥ 1 0...0 ∥ Len(x) can be obtained from the L-bit input string x by computing the smallest non-negative integer k such that L+ 1 + k + n = 0 (mod B), picking k '0' bits and substituting for Len(x) the n-bit representation of the integer L.
Federal Information Processing Standards Publication 180-2. Announcing the SECURE HASH STANDARD", INTERNET CITATION, 1 August 2002 (2002-08-01), page 75PP, XP007918506, [retrieved on 2011-05-03] describes a method for padding a message.

### GENERAL

A problem may arise where it is desired to exchange a message of greater size than the maximum size of message that may be encoded using the length block. In order to conform to the standard, and maintain interoperability with all devices and programs utilising the standard, the message must be broken into separate pieces, each no larger than the maximum message size allowed by the length block, for hashing and transmission. The messages pieces must then be independently validated before reassembly into the original message.

In an embodiment, a computing device implemented method in accordance with claim 1 is provided. Advantageous features are in the dependent claims.

In this aspect of the method the determining may comprise reading a data value stored in the memory.

In this aspect of the method the determining may comprise evaluating the bit-length of the message.

In this aspect of the method the pre-determined value may be a fixed number different than all values that can be used to represent the bit-length of a block size B multiple message less than 2ⁿ bits long.

In this aspect of the method the padding may further comprise, if the bit-length is greater than or equal to 2ⁿ bits, adding an expanded length block of sufficient size to represent bit-lengths up to the pre-determined maximum size, to comprise the padded message; and, the setting further comprising the processor setting bits of the expanded length block to a value representing the bit-length.

In an embodiment a computing device per claim 6 is provided.

In an embodiment, the processor may be operative to assign memory address locations to bits of the message, padding bits and length block and the setting the bits comprises the processor adjusting values in the memory address locations corresponding to each of the bits.

In an aspect of the device the processor may be further operative to determine the bit-length of the message.

In this aspect of the device the processor may be operative to determine the bit-length by reading a data value stored in the memory.

In this aspect of the device the processor may be operative to determine the bit-length by evaluating the bit-length of the message.

In this aspect of the device the device may be operative to pad the message by, if the bit-length is greater than or equal to 2ⁿ bits, adding an expanded length block of sufficient size to represent bit-lengths up to the pre-determined maximum size, to comprise the padded message, and the processor is further operative to, if the bit-length is greater than or equal to 2ⁿ bits, set bits of the expanded length block to a value representing the bit-length.

In an embodiment a computer program product comprising computer readable program code embodied on a non-transitory storage medium may be provided, said program code for enabling a computing device to carry out the above method embodiments.

### BRIEF DESCRIPTION OF THE DRAWINGS

Figure 1 is an illustration representing a computing device.
Figure 2 is an illustration representing a communication subsystem of the computing device of Figure 1.
Figure 3 is an illustration representing a method of preparing a message for input to a cryptographic hash function.
Figure 4 is an illustration representing an embodiment for setting bits in a length block from Figure 3.
Figure 5 is an illustration representing an embodiment for setting bits in a length block from Figure 3.

### DETAILED DESCRIPTION

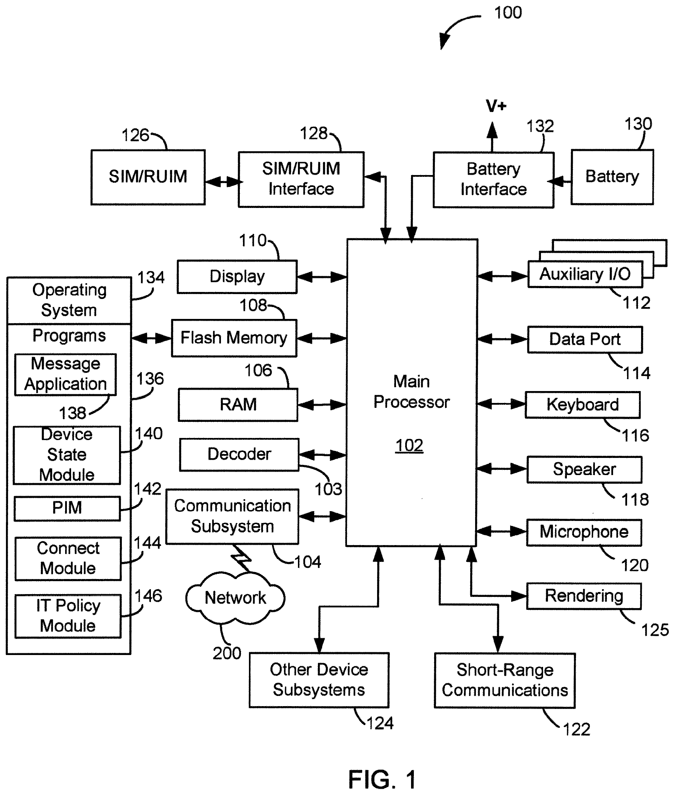

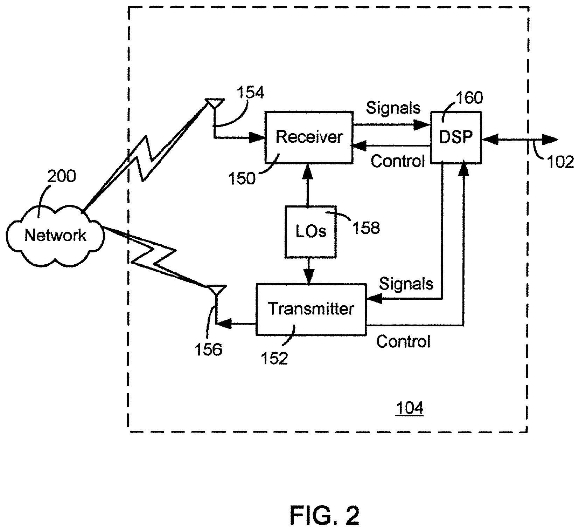

The embodiments described herein may be implemented on a computing device that may comprise, for instance, a computing device such as that illustrated in FIGS. 1 and 2. The computing device may, for instance, communicate with other devices over a wireless communication system or enterprise system. In an embodiment, the computing device 100 may be a mobile device with two-way communication and advanced data communication capabilities including the capability to communicate with other mobile devices or computer systems through a network of transceiver stations. The computing device 100 can also have voice communication capabilities.

FIG. 1 is a block diagram of an example embodiment of a computing device 100. The computing device 100 includes a number of components such as a main processor 102 that controls the overall operation of the computing device 100. Communication functions, including data and voice communications, are performed through a communication subsystem 104. Data received by the computing device 100 can be decompressed and decrypted by decoder 103, operating according to any suitable decompression techniques, and encryption/decryption techniques according to various standards, such as Data Encryption Standard (DES), Triple DES, or Advanced Encryption Standard (AES)). Image data is typically compressed and decompressed in accordance with appropriate standards, such as JPEG, while video data is typically compressed and decompressed in accordance with appropriate standards, such as H.26x and MPEG-x series standards.

The communication subsystem 104 receives messages from and sends messages to a wireless network 200. In this example embodiment of the computing device 100, the communication subsystem 104 is configured in accordance with one or more of Global System for Mobile Communication (GSM), General Packet Radio Services (GPRS) standards, Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 104 with the wireless network 200 represents one or more different Radio Frequency (RF) channels, operating according to defined protocols specified for GSM, GPRS, EDGE, or UMTS, and optionally other network communications. With newer network protocols, these channels are capable of supporting both circuit switched voice communications and packet switched data communications.

The main processor 102 also interacts with additional subsystems such as a Random Access Memory (RAM) 106, a flash memory 108, a display 110, an auxiliary input/output (I/O) subsystem 112, a data port 114, a keyboard 116, a speaker 118, a microphone 120, short-range communications 122 and other device subsystems 124.

Some of the subsystems of the computing device 100 perform communication-related functions, whereas other subsystems can provide "resident" or on-device functions. By way of example, the display 110 and the keyboard 116 can be used for both communication-related functions, such as entering a text message for transmission over the network 200, and device-resident functions such as a calculator or task list.

A rendering circuit 125 is included in the device 100. When a user specifies that a data file is to be viewed on the display 110, the rendering circuit 125 analyzes and processes the data file for visualization on the display 110. Rendering circuit 125 may be implemented as hardware, software, or as a combination of both hardware and software.

The computing device 100 can send and receive communication signals over the wireless network 200 after required network registration or activation procedures have been completed. Network access is associated with a subscriber or user of the computing device 100. To identify a subscriber, the computing device 100 requires a SIM/RUIM card 126 (i.e. Subscriber Identity Module or a Removable User Identity Module) to be inserted into a SIM/RUIM interface 128 in order to communicate with a network. The SIM/RUIM card 126 is one type of a conventional "smart card" that can be used to identify a subscriber of the computing device 100 and to personalize the computing device 100, among other things. Without the SIM/RUIM card 126, the computing device 100 is not fully operational for communication with the wireless network 200. By inserting the SIM/RUIM card 126 into the SIM/RUIM interface 128, a subscriber can access all subscribed services. Services can include: web browsing and messaging such as e-mail, voice mail, Short Message Service (SMS), and Multimedia Messaging Services (MMS). More advanced services can include: point of sale, field service and sales force automation. The SIM/RUIM card 126 includes a processor and memory for storing information. Once the SIM/RUIM card 126 is inserted into the SIM/RUIM interface 128, it is coupled to the main processor 102. In order to identify the subscriber, the SIM/RUIM card 126 can include some user parameters such as an International Mobile Subscriber Identity (IMSI). An advantage of using the SIM/RUIM card 126 is that a subscriber is not necessarily bound by any single physical mobile device. The SIM/RUIM card 126 can store additional subscriber information for a mobile device as well, including datebook (or calendar) information and recent call information. Alternatively, user identification information can also be programmed into the flash memory 108.

The computing device 100 may be a battery-powered device including a battery interface 132 for receiving one or more rechargeable batteries 130. In at least some embodiments, the battery 130 can be a smart battery with an embedded microprocessor. The battery interface 132 is coupled to a regulator (not shown), which assists the battery 130 in providing power V+ to the computing device 100. Although current technology makes use of a battery, future technologies such as micro fuel cells can provide the power to the computing device 100.

The computing device 100 also includes an operating system 134 and software components 136 to 146 which are described in more detail below. The operating system 134 and the software components 136 to 146 that are executed by the main processor 102 are typically stored in a persistent store such as the flash memory 108, which can alternatively be a read-only memory (ROM) or similar storage element (not shown). Those skilled in the art will appreciate that portions of the operating system 134 and the software components 136 to 146, such as specific device applications, or parts thereof, can be temporarily loaded into a volatile store such as the RAM 106. Other software components can also be included, as is well known to those skilled in the art.

The subset of software applications 136 that control basic device operations, including data and voice communication applications, will normally be installed on the computing device 100 during its manufacture. Other software applications include a message application 138 that can be any suitable software program that allows a user of the computing device 100 to send and receive electronic messages. Various alternatives exist for the message application 138 as is well known to those skilled in the art. Messages that have been sent or received by the user are typically stored in the flash memory 108 of the computing device 100 or some other suitable storage element in the computing device 100. In at least some embodiments, some of the sent and received messages can be stored remotely from the device 100 such as in a data store of an associated host system that the computing device 100 communicates with.

The software applications can further include a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the computing device 100 is turned off or loses power.

The PIM 142 includes functionality for organizing and managing data items of interest to the user, such as, but not limited to, e-mail, contacts, calendar events, voice mails, appointments, and task items. A PIM application has the ability to send and receive data items via the wireless network 200. PIM data items can be seamlessly integrated, synchronized, and updated via the wireless network 200 with the mobile device subscriber's corresponding data items stored and/or associated with a host computer system. This functionality creates a mirrored host computer on the computing device 100 with respect to such items. This can be particularly advantageous when the host computer system is the mobile device subscriber's office computer system.

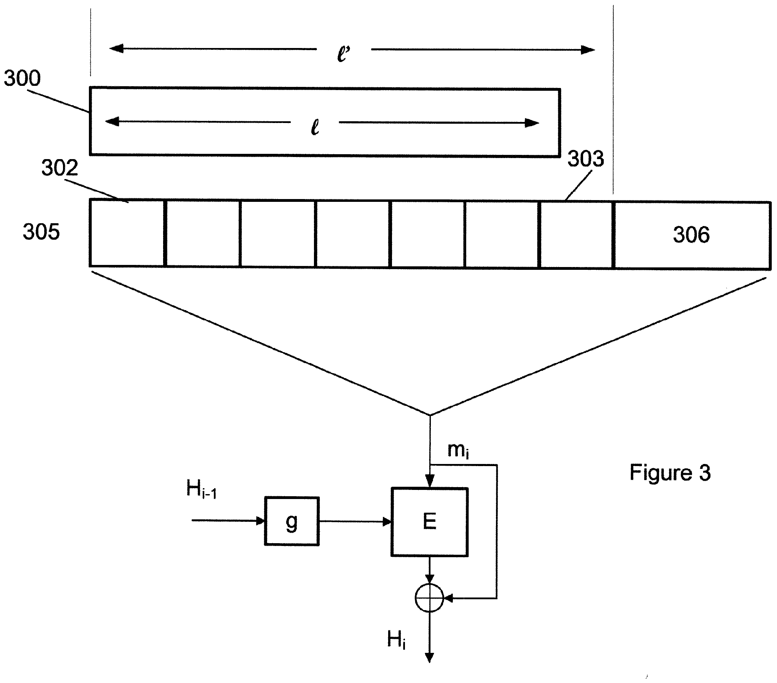

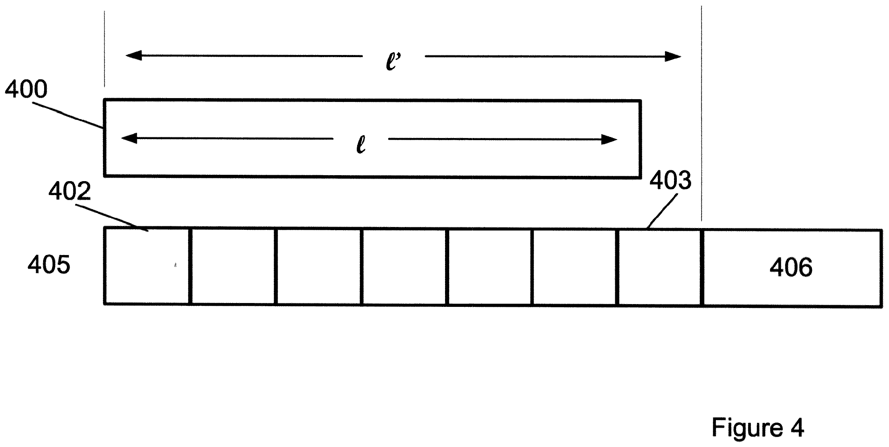

The computing device 100 also includes a connect module 144, and an information technology (IT) policy module 146. The connect module 144 implements the communication protocols that are required for the computing device 100 to communicate with the wireless infrastructure and any host system, such as an enterprise system, that the computing device 100 is authorized to interface with. Examples of a wireless infrastructure and an enterprise system are given in FIGS. 3 and 4, which are described in more detail below.

The connect module 144 includes a set of Application Programming Interfaces (APIs) that can be integrated with the computing device 100 to allow the computing device 100 to use any number of services associated with the enterprise system. The connect module 144 allows the computing device 100 to establish an end-to-end secure, authenticated communication pipe with the host system. A subset of applications for which access is provided by the connect module 144 can be used to pass IT policy commands from the host system to the computing device 100. This can be done in a wireless or wired manner. These instructions can then be passed to the IT policy module 146 to modify the configuration of the device 100. Alternatively, in some cases, the IT policy update can also be done over a wired connection.

Other types of software applications can also be installed on the computing device 100. These software applications can be third party applications, which are added after the manufacture of the computing device 100. Examples of third party applications include games, calculators, utilities, etc.

The additional applications can be loaded onto the computing device 100 through at least one of the wireless network 200, the auxiliary I/O subsystem 112, the data port 114, the short-range communications subsystem 122, or any other suitable device subsystem 124. This flexibility in application installation increases the functionality of the computing device 100 and can provide enhanced on-device functions, communication-related functions, or both. For example, secure communication applications can enable electronic commerce functions and other such financial transactions to be performed using the computing device 100.

The data port 114 enables a subscriber to set preferences through an external device or software application and extends the capabilities of the computing device 100 by providing for information or software downloads to the computing device 100 other than through a wireless communication network. The alternate download path can, for example, be used to load an encryption key onto the computing device 100 through a direct and thus reliable and trusted connection to provide secure device communication. The data port 114 can be any suitable port that enables data communication between the computing device 100 and another computing device. The data port 114 can be a serial or a parallel port. In some instances, the data port 114 can be a USB port that includes data lines for data transfer and a supply line that can provide a charging current to charge the battery 130 of the computing device 100.

The short-range communications subsystem 122 provides for communication between the computing device 100 and different systems or devices, without the use of the wireless network 200. For example, the subsystem 122 can include an infrared device and associated circuits and components for short-range communication. Examples of short-range communication standards include standards developed by the Infrared Data Association (IrDA), Bluetooth™, and the 802.11™ family of standards developed by IEEE.

In use, a received signal such as a text message, an e-mail message, or web page download will be processed by the communication subsystem 104 and input to the main processor 102. The main processor 102 will then process the received signal for output to the display 110 or alternatively to the auxiliary I/O subsystem 112. A subscriber can also compose data items, such as e-mail messages, for example, using the keyboard 116 in conjunction with the display 110 and possibly the auxiliary I/O subsystem 112. The auxiliary subsystem 112 can include devices such as: a touchscreen, mouse, track ball, infrared fingerprint detector, or a roller wheel with dynamic button pressing capability. The keyboard 116 may comprise an alphanumeric keyboard and/or telephone-type keypad. However, other types of keyboards can also be used. A composed item can be transmitted over the wireless network 200 through the communication subsystem 104. It will be appreciated that if the display 110 comprises a touchscreen, then the auxiliary subsystem 112 may still comprise one or more of the devices identified above.

For voice communications, the overall operation of the computing device 100 is substantially similar, except that the received signals are output to the speaker 118, and signals for transmission are generated by the microphone 120. Alternative voice or audio I/O subsystems, such as a voice message recording subsystem, can also be implemented on the computing device 100. Although voice or audio signal output is accomplished primarily through the speaker 118, the display 110 can also be used to provide additional information such as the identity of a calling party, duration of a voice call, or other voice call related information.

FIG. 2 shows an example block diagram of the communication subsystem component 104. The communication subsystem 104 includes a receiver 150, a transmitter 152, as well as associated components such as one or more embedded or internal antenna elements 154 and 156, Local Oscillators (LOs) 158, and a processing module such as a Digital Signal Processor (DSP) 160. The particular design of the communication subsystem 104 is dependent upon the communication network 200 with which the computing device 100 is intended to operate. Thus, it should be understood that the design illustrated in FIG. 2 serves only as one example.

Signals received by the antenna 154 through the wireless network 200 are input to the receiver 150, which can perform such common receiver functions as signal amplification, frequency down conversion, filtering, channel selection, and analog-to-digital (A/D) conversion. A/D conversion of a received signal allows more complex communication functions such as demodulation and decoding to be performed in the DSP 160. In a similar manner, signals to be transmitted are processed, including modulation and encoding, by the DSP 160. These DSP-processed signals are input to the transmitter 152 for digital-to-analog (D/A) conversion, frequency up conversion, filtering, amplification and transmission over the wireless network 200 via the antenna 156. The DSP 160 not only processes communication signals, but also provides for receiver and transmitter control. For example, the gains applied to communication signals in the receiver 150 and the transmitter 152 can be adaptively controlled through automatic gain control algorithms implemented in the DSP 160.

The wireless link between the computing device 100 and the wireless network 200 can contain one or more different channels, typically different RF channels, and associated protocols used between the computing device 100 and the wireless network 200. An RF channel is a limited resource that should be conserved, typically due to limits in overall bandwidth and limited battery power of the computing device 100. When the computing device 100 is fully operational, the transmitter 152 is typically keyed or turned on only when it is transmitting to the wireless network 200 and is otherwise turned off to conserve resources. Similarly, the receiver 150 is periodically turned off to conserve power until it is needed to receive signals or information (if at all) during designated time periods.

Computing device 100 may, in an embodiment, process data generated, or received, by the device 100 to compute a cryptographic hash function. Cryptographic hash functions are commonly used for digitally signing data or content, such as a communication, software or other information that a user of the computing device 100 would like to confirm its source. Generally, the term "message" may be conveniently used to generically describe any data input to be hashed by a cryptographic hash function. As an input, the message may conveniently be ordered as a one-dimensional array or string in the device memory. As is known, however, data may be stored in other formats, though will be read into the cryptographic hash function in blocks of data.

The cryptographic hash function may, for instance, be executed through hardware including a special-purpose processor on decoder 103. In an alternate embodiment, program code comprising software may be stored in persistent memory, such as flash memory 108, on the computing device 100 and loaded into RAM 106 for execution by the main processor 102. As is understood, execution of the program code by the main processor 102 enables the general purpose main processor 102 to perform cryptographic steps comprising the cryptographic hash function on data stored in RAM 106 or persistent memory addressable by the main processor 102, such as flash memory 108. This application refers to both embodiments as a processor operative to carry out a series of steps on data stored in memory 106, 108 of the device.

In an aspect, a computing device program product may be provided for execution on the computing device 100, the computing device program product rendering the computing device 100 operative to carry out steps of the method. In an embodiment, the computing device program product may comprise computer readable program code means embodied on a storage medium such as an optical disc, hard disc or other non-transitory memory.

In practice, use of a cryptographic hash function requires a sending party and a receiving party to agree on a particular hash function, as well as other parameters, so that both can compute the same hash output given a data input to be processed. Among the parameters that need to be specified is the maximum size of the message that may be exchanged between devices and be processed.

In general, a standard may be used to specify the common parameters to be used by parties exchanging data to be processed using a cryptographic hash function. The standard may specify that a length block n bits in size be used for M-D strengthening, allowing for messages up to 2ⁿ bits in length to be hashed. In an example standard, the ZigBee Alliance, for instance, has specified a length block of 16 bits.

Thus for the ZigBee Alliance standard example, n = 16 and message bit-lengths up to 2¹⁶ bits, 65,536 bits or 8192 bytes, may be hashed. As explained above, this causes complications where it is desired to send a message of greater than 65kb using the defined cryptographic hash and still conform to the length block specified by the standard. For instance, a party would not be able to use the cryptographic hash function for an application or other software code that would typically be much larger than 65kb.

Referring to Figure 3, a schematic illustrating the preparation of data for input to a cryptographic hash function. For convenience, the data may be referred to generically as a message. The message 300 will be split into individual blocks 302 of fixed block size B for input to the cryptographic hash function. The last block 303 may be padded with padding bits, for instance with a '1' bit and '0' bits as necessary to fill the last block 303, and a length block 306 of n bits to create the padded message. In the ZigBee Alliance example, for instance, the last block 303 of a message of bit-length ℓ bits may be padded with a '1' followed by k '0' bits, where k is the smallest non-negative solution to the equation ℓ + 1 + k = 7n (mod 8n). Thus, the padded length of the padded message, the message 300 with padding bits and length block 306 appended, is a multiple of the fixed block size B.

The length block 306 represents bit values corresponding to the padded length of the message to be hashed.

In the ZigBee Alliance example, the maximum message length is 2¹⁶ - bits, but the implementation of the standard includes only messages of byte-length multiples, so the n=16 bit length block 306 only uses 13 bits of the 16 bits available for counting the bit-length. The remaining bits always hold a '0' value. As will be appreciated, while the Zigbee Alliance example includes specific values, the selection of the block size B and the size of the length block may vary depending upon a pre-selected design choice.

A set of solutions is provided below for hashing messages of greater than or equal to 2ⁿ bits in size, while keeping some measure of M-D strengthening intact and using the length block 306 specified by the standard for messages less than 2ⁿ bits long. In certain embodiments, the messages are limited to an upper bound bit-length, a pre-determined maximum message size such as 2²ⁿ bits, for practical computing considerations including assigning a memory location for the message to be processed. As will be appreciated, the solutions are not limited to the example ZigBee Alliance standard, and will apply to other situations where a length block that is smaller than the intended message size is provided.

In accordance with certain embodiments, the solutions maintain the length block 306 as implemented in the standard for messages less than 2ⁿ bits in size to allow for interoperability with pre-existing devices implementing the standard. In situations where a computing device is to be used to process a message greater than 2ⁿ bits in size, then the solutions described below may be employed. Since pre-existing devices are unable to process messages greater than 2ⁿ bits in size the solutions need not follow the standard in processing the message, however any processing should be constructed to minimise or reduce the chances of a collision with messages processed under the standard. The following solutions provide varying levels of robustness and reliance on M-D strengthening. The security of iterative hash functions depends on the details of the padding mechanism. As already suggested, MD-strengthening has the effect that provability results on the compression function of an iterated hash function carry over to the hash function itself, using a security argument that involves that an MD-padded input string cannot be a suffix of another MD-input string. While all known constructions using MD-strengthening rely on appending a fixed-size string to the input string indicating the bit-length of the unpadded input string, the security argument does in fact apply to variable-size encodings of the bit-length of the unpadded string as well and, thereby, to the MD-padding construction presented here.

Security results for padding without MD-strengthening (termed Plain-PD in Lei Duo, Chao Li, "Improved Collision Resistance Bounds on PGV Schemes," International Assocation for Cryptologic Research, IACR ePrint 2006-462 (hereinafter "IACR 2006-462"). Available from http://eprint.iacr.org/2006/462) naturally carry over to the solutions presented below. Of particular relevance are the results of IACR 2006-462, which stipulates that for the Matyas-Meyer-Oseas hash function, and most other secure block-cipher based hash function in "Group 1" of the so-called PGV family of hash functions, the security properties are as presented in Table 1 below:

**Table 1: Summary of main hash function security bounds. Adversary asks at most q queries with plain padding or with padding with MD-strengthening (MD-padding). The parameter t is the first message length.**

| | **Plain padding** | | **MD padding** | |
|---|---|---|---|---|
| | **Lower bound** | **Upper bound** | **Lower bound** | **Upper bound** |
| Preimage resistance, | *q*/2*ⁿ* | 2*q*/2*ⁿ* | *q*/2*ⁿ* | 2*q*/2*ⁿ* |
| 2^{nd} preimage resistance | 1/4 *q*(*t*+1)/2*ⁿ* | q(*t*+1)/2*ⁿ* | *q*/2*ⁿ* | 2*q*/2*ⁿ* |
| Collision resistance | ½ *q*(*q*+1)/2*ⁿ* | *q(q*+1)/2*ⁿ* | ½*q*(*q*+1)/2*ⁿ* | *q*(*q*+1)/2*ⁿ* |

Table 1 illustrates that for 2^{nd} preimage resistance the security bounds for padding with MD-strengthening do not depend on the input size of the messages, whereas the security bounds for plain padding (i.e., without MD strengthening) grow proportional to the message size t in question. Thus, the security bound for the fourth embodiment presented below offers 20 bits more security than constructions without any MD-strengthening.

The first embodiment presented below, provides equivalent security to a message with plain padding. The second and third embodiments offer some MD-strengthening and can be expected to offer security bounds somewhere in between these two extreme cases. Since different constructions have different impacts on the incremental implementation cost of the hash function at hand, appropriate trade-offs between offered security assurances and incremental complexity can be made.

In a first embodiment, illustrated in Figure 4, a message 400 has a bit-length ℓ greater than or equal to 2ⁿ bits. The message 400 may be padded with sufficient padding bits and the length block 406 such that the padded message is a multiple of the fixed block size B.

In the ZigBee Alliance standard example, for instance, the padding comprises a '1' followed by k '0' bits, where k is the smallest non-negative solution to the equation ℓ + 1 + k = 7n (mod 8n), and the length block 406. Thus, the message is effectively being padded with a '1' bit and enough '0's as necessary to fill the last block 403. In the embodiment illustrated in Figure 4, the length block 406 is appended to the end of the padding bits to complete the input 405 to the cryptographic hash function. In this embodiment, the length block 406 is filled with a fixed value that applies for every message of bit-length greater than or equal to 2ⁿ bits. In an aspect, the fixed value differs from values used to identify bit-lengths less than 2ⁿ bits.

As indicated below, while the length block 406 is shown as being appended to the end of the padding bits, other padding arrangements may be used provided the length of the padded message is a multiple of an integer factor times the block size B.

Where a message 400 has a bit-length ℓ greater than or equal to 2ⁿ bits, for example, the length block 406 may be filled with a '1' in each bit field. For instance, using the ZigBee Alliance standard for example, only 13 bits of the length block 406 are normally used for messages less than 2ⁿ bits in length which are a multiple of a byte-sized Block size, and the remaining 3 bits are normally fixed to '0'. Thus, for messages 400 greater than or equal to 2ⁿ bits, the remaining 3 bits may be set to a value other than (0,0,0), for instance (1, 1,1).

In the first embodiment, input for a cryptographic hash function may be prepared by a computing device processing a message 400 having a bit-length of ℓ bits that is less than a pre-determined maximum size, for instance, 2²ⁿ bits. A processor of the device may pad the message 400 by adding sufficient padding bits and a length block 406 to the message 400, such that a padded length ℓ' of the padded message is a multiple of an integer factor times the pre-defined block size B. In an embodiment the padding bits may comprise a '1' bit and sufficient '0' bits to complete the last block 403. As indicated above, sufficient '0' bits may, in the ZigBee Alliance example, be described as k '0' bits, where k is the smallest non-negative solution to the equation ℓ + 1 + k = 7n (mod 8n).

The length block 406, shown in Figure 4 appended after the padding bits, may either be set by the processor to identify the number of bits in the message 400, the bit-length, if less than 2ⁿ, or if greater than or equal to 2ⁿ, the length block 406 may be set to a pre-determined value non-representative of the bit-length. In an embodiment the pre-determined value may be a value different than all values that can be used to represent the bit-length when less than 2ⁿ bits long For instance, the pre-determined value may be all '1's. The padded message may then be input to the cryptographic hash function in block size B increments of bits.

As will be appreciated, while the length blocks 406 is still appended to the message, the length block 406 is no longer required to identify the actual length in bits of the message being processed for all cases. In the case of the first embodiment, the fixed number may correctly identify the message bit-length in one instance.

While the embodiment includes the length block when calculating the cryptographic hash function, the length block no longer measures the message bit-length in bits. M-D strengthening is not strictly maintained. The first embodiment provides plain padding.

While the message for the above embodiment is no longer constrained by the size of the length block 306 in bits, an upper bound (UB) to the maximum message size should be defined to maintain security. In a second embodiment, an UB of 2²ⁿ is imposed. In a third embodiment, the maximum message size is B ● 2ⁿ bits.

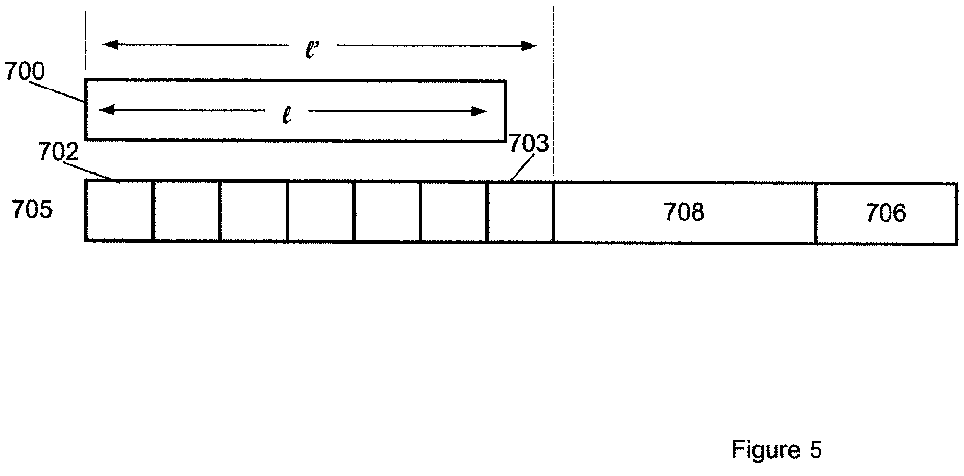

In a second embodiment, illustrated in Figure 5, a message 700 having a bit-length greater than or equal to 2ⁿ bits may be padded with sufficient padding bits, an expanded length block 708 of p bits and a length block 706 of n bits to provide a padded message having a padded length a multiple of an integer factor times the block size B. In an embodiment, the padding bits may comprise a '1' followed by sufficient '0' bits. In an embodiment where the expanded length block 708 is 2n bits in length and using the ZigBee Alliance example, sufficient '0' bits may comprise k '0' bits, where k is the smallest non-negative solution to the equation ℓ + 1 + k = 5n (mod 8n). In this case, the k '0' bits must take into account the 2n bit size of the expanded length block 708 when calculating a sufficient number of bits for padding. As will be appreciated, the actual values of the equation will change depending upon the size of the expanded length block 708 as well as the other parameters including the size of the length block 706.

Thus, as shown in Figure 5, the message 700 is effectively being padded with enough '0's as necessary to fill the last block 703. The length block 706 appended to the end of the padding bits may either be set by the processor to identify the bit-length, if less than 2ⁿ bits, or if greater than or equal to 2ⁿ bits, the processor may calculate and set the bits of the length block 706 to a pre-determined value non-representative of the bit-length. In accordance with certain embodiments, the pre-determined value is a value that is not used for message bit-lengths of a block size B multiple message less than 2ⁿ bits. For instance, the length block 706 may be set to all '1's as mentioned above.

When the bit-length is greater than or equal to 2ⁿ bits, the expanded length field 708 may included in addition to the padding bits and the length block 706. The expanded length field 708 in certain embodiments comprises sufficient bits to represent bit-lengths up to the pre-determined upper bound, the maximum size, and accordingly may used to represent the full bit-length of the message 700.

In this way an expanded padded message 705 may be input to the cryptographic hash function and M-D strengthening maintained provided the expanded length field 708 is made sufficiently large to accommodate the bit-length of the message 700.

In the second embodiment, input for a cryptographic hash function may be prepared by a computing device 100 processing a message 700 having a bit-length ℓ that is less than an upper bound UB, for instance a maximum size of 2²ⁿ bits. A processor of the device may pad the message 700 by, if the bit-length is less than 2ⁿ bits, adding sufficient padding bits and a length block 706 to the message 700, such that a padded length ℓ' of the padded message is a multiple of an integer factor times the pre-defined block size B. If the bit-length is greater than or equal to 2ⁿ bits, the processor may pad the message 700 by adding sufficient padding bits, an expanded length block 708 and a length block 706 to the message 700, such that an expanded padded length of the expanded padded message is a multiple of an integer factor times the pre-defined block size B.

In an embodiment shown in Figure 5, the padding bits may comprise a '1' bit and sufficient '0' bits to complete the last block 703.

The length block 706 appended after the padding bits may either be set by the processor to identify the bit-length of the message 700, if less than 2ⁿ, or if greater than or equal to 2ⁿ, the length block 706 may be set to a pre-determined value non-representative of the bit-length.

When the bit-length is greater than or equal to 2ⁿ, the expanded length block 708, shown in Figure 5 located between the padding bits and the length block 706, may be set by the processor to identify the bit-length of the message 700.

Various embodiments of the present invention having been thus described in detail by way of example, it will be apparent to those skilled in the art that variations and modifications may be made without departing from the invention. The invention includes all such variations and modifications as fall within the scope of the appended claims.

## Claims

1. A computing device (100) implemented method for preparing a message (400, 700) having a bit-length determined by a byte-length multiple number of bits, wherein the bit-length is less than or equal to a pre-determined maximum size, for input to a cryptographic hash function operating on blocks (302) of a predetermined block size of B bits, the computing device (100) comprising a processor (102) in communication with a memory (108), the method comprising:
the processor determining the bit-length of the message;
the processor (102) padding the message by adding sufficient padding bits and providing a length block (406, 706) of length n bits thus forming a padded message, such that a padded bit length of the padded message is an integer factor times the block size B;
the processor setting the bits of the length block (406, 706) such that if the message has a bit-length less than 2ⁿ bits, the bits of the length block represent the number of bits in the message; and, if the message (400, 700) has a bit-length greater than or equal to 2ⁿ bits, the length block (406, 706) is set to a pre-determined value non-representative of the number of bits in the message, the pre-determined value being a value that is different to the values used to represent the bit length of the message when the message has a bit length less than 2ⁿ bits.

2. The method of claim 1 wherein the determining comprises reading a data value stored in the memory.

3. The method of claim 1 wherein the determining comprises evaluating the bit-length of the message.

4. The method of any one of claims 1 to 2 wherein the pre-determined value is a fixed number such that the length block value (706) is different than all values that can be used to represent the bit-length of a block size B multiple message less than 2ⁿ bits long.

5. The method of claim 1 wherein the padding further comprises, if the bitlength is greater than or equal to 2ⁿ bits, adding an expanded length block (708) of sufficient size to represent bit-lengths up to the pre-determined maximum size, to comprise the padded message; and, the setting further comprising the processor setting bits of the expanded length block (708) to a value representing the bit-length.

6. A computing device (100) for preparing a message having a bit-length number of bits, wherein the bit-length is less than or equal to a pre-determined maximum size, for input to a cryptographic hash function operating on blocks of a predetermined block size of B bits, the computing device comprising a processor in communication with a memory for processing the message, the processor being configured to perform the steps of the method of any preceding claim.

7. A computer program product comprising computer readable program code (136 -146)) which when implemented on a computing device cause the device to carry out the method of any one of claims 1 to 5.

## Patentansprüche

1. Ein Computervorrichtung-(100)-implementiertes Verfahren zum Vorbereiten einer Nachricht (400, 700) mit einer Bitlänge, die durch eine Byte-Länge-Mehrfaches-Bitanzahl bestimmt wird, wobei die Bitlänge kleiner oder gleich einer vorgegebenen maximalen Größe ist, zur Eingabe in eine kryptographische Hashfunktion, die auf Blöcken (302) einer vorgegebenen Blockgröße von B Bits arbeitet, wobei die Computervorrichtung (100) einen Prozessor (102) in Kommunikation mit einem Speicher (108) aufweist, wobei das Verfahren aufweist:
den Prozessor bestimmt die Bitlänge der Nachricht;
der Prozessor (102) füllt die Nachricht durch Hinzufügen von ausreichenden Padding- bzw. Füll-Bits und Vorsehen eines Längenblocks (406, 706) einer Länge n Bits, wodurch eine gefüllte Nachricht gebildet wird derart, dass eine gefüllte Bit-Länge der gefüllten Nachricht ein ganzzahliger Faktor multipliziert mit der Blockgröße B ist;
der Prozessor setzt die Bits des Längenblocks (406, 706) derart, dass, wenn die Nachricht eine Bitlänge kleiner als 2ⁿ Bits hat, die Bits des Längenblocks die Anzahl von Bits in der Nachricht repräsentieren; und, wenn die Nachricht (400, 700) eine Bitlänge größer oder gleich als 2ⁿ Bits hat, der Längenblock (406, 706) auf einen vorgegebenen Wert gesetzt wird, der nicht-repräsentativ ist für die Anzahl von Bits in der Nachricht, wobei der vorgegebene Wert ein Wert ist, der verschieden ist von Werten, die verwendet werden zum Repräsentieren der Bitlänge der Nachricht, wenn die Nachricht eine Bitlänge von weniger als 2ⁿ Bits hat.

2. Das Verfahren gemäß Anspruch 1, wobei das Bestimmen ein Lesen eines in dem Speicher gespeicherten Datenwerts aufweist.

3. Das Verfahren gemäß Anspruch 1, wobei das Bestimmen ein Evaluieren der Bitlänge der Nachricht aufweist.

4. Das Verfahren gemäß einem der Ansprüche 1 bis 2, wobei der vorgegebene Wert eine feste Zahl ist derart, dass der Längenblockwert (706) von allen Werten verschieden ist, die verwendet werden können, um die Bitlänge einer Blockgröße-B-Mehrfaches-Nachricht weniger als 2ⁿ Bits lang zu repräsentieren.

5. Das Verfahren gemäß Anspruch 1, wobei das Füllen weiter aufweist, wenn die Bitlänge größer oder gleich 2ⁿ Bits ist, Hinzufügen eines erweiterten Längenblocks (708) von ausreichender Größe, um Bitlängen bis zu der vorgegebenen maximalen Größe zu repräsentieren, um die gefüllte Nachricht zu umfassen; und das Setzen weiter aufweist, dass der Prozessor Bits des erweiterten Längenblocks (708) auf einen Wert setzt, der die Bitlänge repräsentiert.

6. Computervorrichtung (100) zum Vorbereiten einer Nachricht mit einer Bitlängenanzahl von Bits, wobei die Bitlänge kleiner oder gleich einer vorgegebenen maximalen Größe ist, zur Eingabe in eine kryptographische Hashfunktion, die auf Blöcken einer vorgegebenen Blockgröße von B Bits arbeitet, wobei die Computervorrichtung einen Prozessor in Kommunikation mit einem Speicher zum Verarbeiten der Nachricht aufweist, wobei der Prozessor konfiguriert ist zum Durchführen der Schritte des Verfahrens gemäß einem vorhergehenden Anspruch.

7. Computerprogrammprodukt, das einen computerlesbaren Programmcode (136 - 146) aufweist, der, wenn auf einer Computervorrichtung implementiert, die Vorrichtung veranlasst zum Ausführen des Verfahrens gemäß einem der Ansprüche 1 bis 5.

## Revendications

1. Procédé mis en oeuvre par un dispositif informatique (100) pour préparer un message (400, 700) ayant une longueur binaire déterminée par un nombre de bits multiple de la longueur d'octet, où la longueur binaire est inférieure ou égale à une taille maximale prédéterminée, destiné à être introduit dans une fonction de hachage cryptographique fonctionnant sur des blocs (302) d'une taille de bloc prédéterminée de B bits, le dispositif informatique (100) comprenant un processeur (102) en communication avec une mémoire (108), le procédé comprenant le fait :
de déterminer, par le biais du processeur, la longueur binaire du message ;
de bourrer, par le biais du processeur (102), le message en ajoutant des bits de bourrage suffisants et de fournir, par le biais du processeur (102), un bloc de longueur (406, 706) ayant une longueur n bits formant ainsi un message bourré, de sorte qu'une longueur binaire bourrée du message bourré soit un facteur entier multiplié par la taille de bloc B ;
de régler, par le biais du processeur, les bits du bloc de longueur (406, 706) de sorte que, si le message a une longueur binaire inférieure à 2ⁿ bits, les bits du bloc de longueur représentent le nombre de bits dans le message ; et, si le message (400, 700) a une longueur binaire supérieure ou égale à 2ⁿ bits, le bloc de longueur (406, 706) est réglé à une valeur prédéterminée ne représentant pas le nombre de bits dans le message, la valeur prédéterminée étant une valeur qui est différente des valeurs utilisées pour représenter la longueur binaire du message lorsque le message a une longueur binaire inférieure à 2ⁿ bits.

2. Procédé de la revendication 1, dans lequel la détermination comprend la lecture d'une valeur de données stockée dans la mémoire.

3. Procédé de la revendication 1, dans lequel la détermination comprend l'évaluation de la longueur binaire du message.

4. Procédé de l'une quelconque des revendications 1 à 2, dans lequel la valeur prédéterminée est un nombre fixe de sorte que la valeur de bloc de longueur (706) soit différente de toutes les valeurs qui peuvent être utilisées pour représenter la longueur binaire d'un message multiple de la taille de bloc B inférieure à 2ⁿ bits.

5. Procédé de la revendication 1, dans lequel le bourrage comprend en outre, si la longueur binaire est supérieure ou égale à 2ⁿ bits, l'ajout d'un bloc de longueur étendue (708) de taille suffisante pour représenter des longueurs binaires jusqu'à la taille maximale prédéterminée, pour comprendre le message bourré ; et, le réglage comprenant en outre le réglage, par le biais du processeur, des bits du bloc de longueur étendue (708) à une valeur représentant la longueur binaire.

6. Dispositif informatique (100) pour préparer un message ayant un nombre de bits de longueur binaire, où la longueur binaire est inférieure ou égale à une taille maximale prédéterminée, destiné à être introduit dans une fonction de hachage cryptographique fonctionnant sur des blocs d'une taille de bloc prédéterminée de B bits, le dispositif informatique comprenant un processeur en communication avec une mémoire pour traiter le message, le processeur étant configuré pour effectuer les étapes du procédé de l'une des revendications précédentes.

7. Produit de programme informatique comprenant un code de programme lisible par ordinateur (136 - 146) qui, lorsqu'il est mis en oeuvre sur un dispositif informatique, amène le dispositif à réaliser le procédé de l'une quelconque des revendications 1 à 5.
